# EUROPEAN PATENT SPECIFICATION

(11) **EP 4 024 602 B1**
(45) Date of publication and mention of the grant of the patent: **03.06.2026**
(21) Application number: 21779902.2
(22) Date of filing: 17.03.2021
(51) Int. Cl.: H01M 50/627, H01M 50/102, H01M 50/188, H01M 50/531, H01M 50/545, H01M 10/04, H01M 50/109, H01M 50/559

(54) **BATTERY AND POWERED APPARATUS PROVIDED WITH BATTERY**
BATTERIE UND ANGETRIEBENES GERÄT, DAS MIT EINER BATTERIE VERSEHEN IST
BATTERIE ET APPAREIL ALIMENTÉ POURVU DE LA BATTERIE

(30) Priority: 31.03.2020 CN 202020450681 U
(43) Date of publication of application: 06.07.2022
(73) Proprietor: Ningde Amperex Technology Ltd., Ningde, Fujian 352106 (CN)
(72) Inventor: YU, Ziqiang, Ningde, Fujian 352106 (CN); LIN, Liqing, Ningde, Fujian 352106 (CN); HUANG, Zhifeng, Ningde, Fujian 352106 (CN); WANG, Hui, Ningde, Fujian 352106 (CN)
(74) Representative: Icosa
(86) International application number: PCT/CN2021/081374
(87) International publication number: WO 2021/197077

(56) References cited:
- CN-A- 102 623 650
- CN-A- 110 880 566
- CN-A- 110 880 566
- CN-U- 211 605 201
- CN-Y- 2 739 806
- JP-A- 2009 224 173
- US-A1- 2019 237 742
- US-A1- 2021 367 310

## Description

### TECHNICAL FIELD

This application relates to a battery and an electric apparatus with such battery.

### BACKGROUND

A battery usually includes a cell, a housing configured to accommodate the cell, and a top cover mounted to the housing. The top cover is usually provided with an injection opening, and an electrolyte is injected into the housing from the injection opening. The cell includes electrode plates and tabs connected to the electrode plates, where the tabs are configured to achieve electronic conduction.

However, because the injection opening is located on the top of the cell, the electrolyte is impeded by the electrode plates and the tabs during injection, resulting in low injection efficiency, which in turn affects infiltration efficiency of the electrolyte to the electrode plates.

Relevant prior art can be found in CN110880566 A and US2019/237742 Al.

### SUMMARY

In order to address the foregoing shortcomings of the prior art, it is necessary to provide a battery that can improve injection efficiency, so as to improve infiltration efficiency of an electrolyte to electrode plates.

This application provides a battery according to claim 1.

In some embodiments of this application, the distance between the central axis of the injection opening and the second side face ranges from 0.4 mm to 1 mm.

In some embodiments of this application, a sealing piece is provided in the injection opening.

In some embodiments of this application, the injection opening, the sealing piece, and the second housing are all rounded, where a distance between a center of the injection opening and a center of the second housing is defined as M, a radius of the second housing is defined as R1, a radius of the sealing piece is defined as R2, and M, R1, and R2 satisfy M=R1-R2-0.2 mm.

In some embodiments of this application, the second housing is further provided with a through hole, where a pole electrically insulated from the second housing is provided in the through hole.

In some embodiments of this application, the electrode assembly includes a first electrode plate, a separator, and a second electrode plate, where the first tab is connected to the first electrode plate, a second tab is connected to the second electrode plate, the second tab is electrically connected to the pole, and the first tab is electrically connected to the first housing or the second housing.

In some embodiments of this application, the first housing is provided with a through hole, where a pole electrically insulated from the first housing is provided in the through hole, and the first tab is electrically connected to the pole.

This application further provides an electric apparatus, where the electric apparatus includes the foregoing battery.

In this application, the projection of the injection space onto the second housing covers at least part of the injection opening, so that during injection, electrolyte can bypass the laminated cell and directly flow into the injection space from the injection opening. Therefore, this application can improve injection efficiency, thereby improving infiltration efficiency of the electrolyte to the electrode plates.

### BRIEF DESCRIPTION OF DRAWINGS

FIG. 1 is a schematic structural exploded view of a battery according to an embodiment of this application.
FIG. 2 is a top view of the battery shown in FIG. 1.
FIG. 3 is a cross-sectional view of the battery shown in FIG. 1.
FIG. 4 is a top view of the battery shown in FIG. 1 without a second housing.
FIG. 5 is a schematic structural exploded view of a battery according to another embodiment of this application.
FIG. 6 is a cross-sectional view of the battery shown in FIG. 5.
FIG. 7 is a cross-sectional view of a battery according to another embodiment of this application.
FIG. 8 is a schematic structural diagram of an electric apparatus according to an embodiment of this application.

### Reference signs of main components:

| | |
|---|---|
| electric apparatus | 1 |
| laminated cell | 10 |
| electrode assembly | 11 |
| first electrode plate | 11a |
| second electrode plate | 11b |
| first tab | 12 |
| second tab | 13 |
| first housing | 20 |
| second housing | 30 |
| injection opening | 31 |
| sealing piece | 32 |
| through hole | 33 |
| pole | 34 |
| battery | 100, 200, 300 |
| injection space | 101 |
| first side face | 111 |
| first adapting piece | 120 |
| first face | 121 |
| second face | 122 |
| second side face | 123 |
| second adapting piece | 130 |
| flat region | 1110 |
| cambered region | 1111 |
| central axis | A |
| distance | L,M |

| | |
|---|---|
| radius | R1, R2 |

This application will be further described with reference to the accompanying drawings in the following specific embodiments.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application.

Unless otherwise defined, all technical and scientific terms used herein shall have the same meanings as commonly understood by those skilled in the art to which this application belongs. The terms used herein in the specification of this application are merely intended to describe specific embodiments but not intended to limit this application.

The following describes in detail some embodiments of this application with reference to the accompanying drawings. In absence of conflicts, the following embodiments and features in the embodiments may be combined.

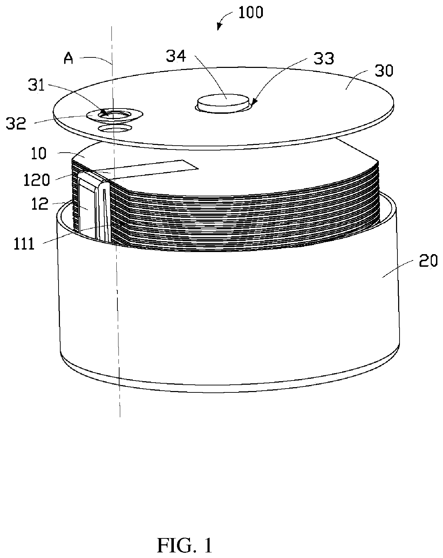

Referring to FIG. 1 to FIG. 4, an embodiment of this application provides a battery 100, including a laminated cell 10, a first housing 20 configured to accommodate the laminated cell 10, and a second housing 30 mounted to the first housing 20. The laminated cell 10 includes an electrode assembly 11 and a first tab 12.

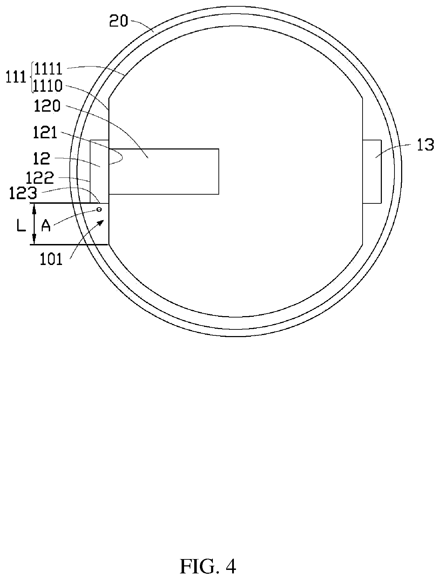

The electrode assembly 11 includes a first side face 111, where the first tab 12 is connected to the first side face 111. The first housing 20, the first tab 12, and the first side face 111 together define an injection space 101 (as shown in FIG. 4). The second housing 30 is provided with an injection opening 31, where a projection of the injection space 101 onto the second housing 30 covers at least part of the injection opening 31.

In this application, the projection of the injection space 101 onto the second housing 30 covers at least part of the injection opening 31, so that during injection, electrolyte can bypass the laminated cell 20 and directly flow into the injection space 101 from the injection opening 31. Therefore, this application can improve injection efficiency, thereby improving infiltration efficiency of the electrolyte to electrode plates.

As shown in FIG. 4, in an embodiment, a central axis A of the injection opening 31 is located inside the injection space 101. The injection opening 31 may be in a geometrically symmetric shape, such as a rounded, elliptic, square, or hexagonal shape. The central axis A of the injection opening 31 is located inside the injection space 101, such that the projection of the injection space 101 onto the second housing 30 and the injection opening 31 have a larger overlapping area, further ensuring that the electrolyte is not impeded by the laminated cell 10 during injection.

It can be understood that, in other embodiments, the injection opening 31 may be in other asymmetric shapes, which is not limited in this application. The injection opening 31 may be formed by stamping, mechanical cutting, or the like.

As shown in FIG. 4, in an embodiment, the first tab 12 includes a first face 121 closer to the laminated cell 10, a second face 122 farther away from the laminated cell 10, and a second side face 123 connected between the first face 121 and the second face 122. The first side face 111 includes a flat region 1110 and a cambered region 1111 connected to the flat region 1110, where the flat region 1110, the second side face 123, and the first housing 20 together define the injection space 101. As shown in FIG. 4, a cross section of the injection space 101 is roughly triangular. Therefore, a region of the injection space 101 closer to the first tab 12 is larger than a region of the injection space 101 farther away from the first tab 12.

In an embodiment, a distance between the second side face 123 and a joint of the flat region 1110 and the cambered region 1111 is defined as L, and a distance between the central axis A of the injection opening 31 and the second side face 123 is less than or equal to 0.5L. In this way, the central axis A of the injection opening 31 is closer to the first tab 12, such that electrolyte flows into a region with a larger cross section in the injection space 101 during injection, further ensuring that the electrolyte is not impeded by the laminated cell 10 during injection.

Further, the distance between the central axis A of the injection opening 31 and the second side face 123 ranges from 0.4 mm to 1 mm.

As shown in FIG. 1, in an embodiment, a sealing piece 32 is provided in the injection opening 31. After injection is completed, the injection opening 31 is sealed by using the sealing piece 32, preventing the injected electrolyte from spilling over or preventing external impurities from entering the battery 100. The sealing piece 32 is made of elastic materials. The sealing piece 32 is fastened into the injection opening 31 through elastic deformation force generated by stress. In other embodiments, the sealing piece may alternatively be a sealing nail made of weldable materials (such as stainless steel or aluminum alloy). After the sealing nail is inserted into the injection opening 31, the sealing nail is fastened to the second housing 30 by laser welding. In this way, the injection opening 31 can be reliably sealed.

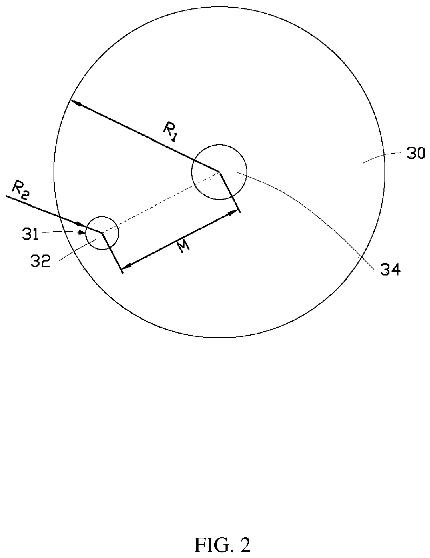

As shown in FIG. 2, in an embodiment, the injection opening 31, the sealing piece 32, and the second housing 30 are all rounded, where a distance between a center of the injection opening 31 and a center of the second housing 30 is defined as M, a radius of the second housing 30 is defined as R1, a radius of the sealing piece 32 is defined as R2, and M, R1, and R2 satisfy M=R1-R2-0.2 mm (0.2 mm is wall thickness of the first housing 20, and according to the relational formula, the sealing piece 32 does not affect welding of the first housing 20 and the second housing 30).

As shown in FIG. 1 to FIG. 3, in an embodiment, the second housing 30 is further provided with a through hole 33, where a pole 34 electrically insulated from the second housing 30 is provided in the through hole 33. As shown in FIG. 2, the pole 34 may be located at the center of the second housing 30.

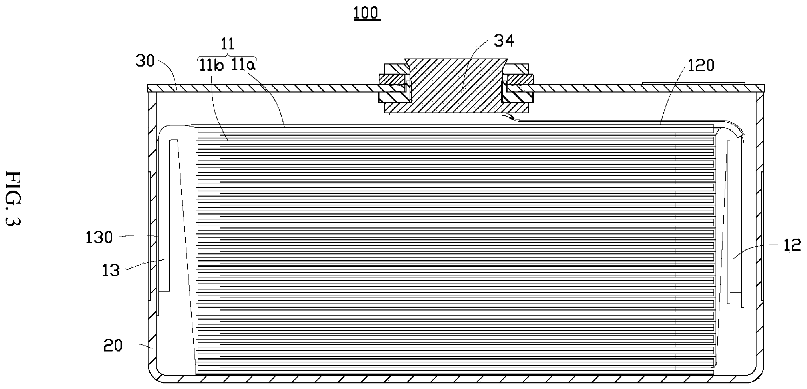

Further, as shown in FIG. 3, the electrode assembly 11 includes a first electrode plate 11a, a second electrode plate 11b, and a separator (not shown in the figure) located between the first electrode plate 11a and the second electrode plate 11b that are stacked, where the first tab 12 is connected to the first electrode plate 11a. A second tab 13 is connected to the second electrode plate 11b, the first tab 12 is electrically connected to the pole 34, and the second tab 13 is electrically connected to the first housing 20 or the second housing 30.

Specifically, the first tab 11a includes a first current collector and a first active material layer provided on a surface of the first current collector, where the first tab 12 may be electrically connected to the first current collector by welding, and electrically connected to the pole 34 by using a first adapting piece 120. The second electrode plate 11b includes a second current collector and a second active material layer provided on a surface of the second current collector, where the second tab 13 may be electrically connected to the second current collector by welding, and electrically connected to the first housing 20 or the second housing 30 by using a second adapting piece 130.

More specifically, the first housing 20 and the second housing 30 may be made of metal. For example, the first housing 20 and the second housing 30 may be made of steel alloy, aluminum alloy, iron alloy, copper alloy, nickel alloy, or the like.

By electrically connecting the first tab 12 to the pole 34, the pole 34 can present the same polarity as the first electrode plate 11a. By electrically connecting the second tab 13 to the first housing 20 or the second housing 30, when the first housing 20 and the second housing 30 are fastened by welding, the first housing 20 and the second housing 30 can generally present the same polarity as the second electrode plate 11b; when the first housing 20 and the second housing 30 are fastened by using an insulating pad, the first housing 20 or the second housing 30 can present the same polarity as the second electrode plate 11b.

As shown in FIG. 1 and FIG. 3, the battery 100 in this embodiment is a button cell, and the first housing 20 and the second housing 30 are both made of stainless steel. When preparation, the first housing 20 and the second housing 30 may be made into required shapes by laser cutting, machine tool processing, or other processes. The first housing 20 may alternatively be made into a scour hole by stamping forming, so as to accommodate the laminated cell 10.

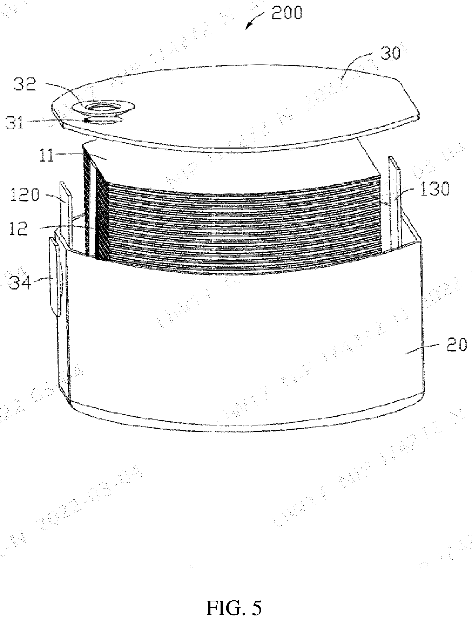

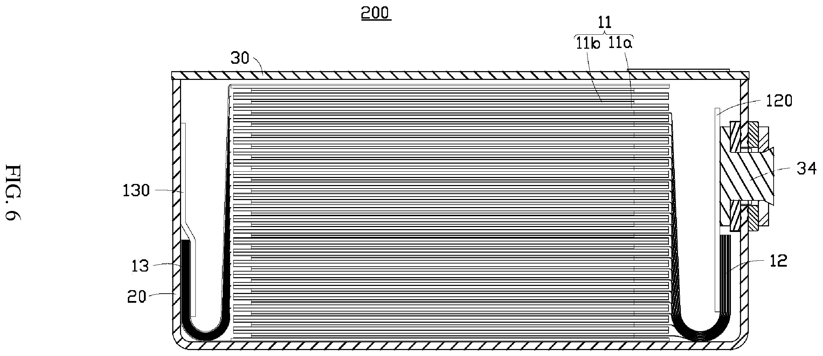

Referring to FIG. 5 and FIG. 6, some other embodiments of this application further provide a battery 200. The difference from the battery 100 is that the pole 34 electrically connected to the first tab 12 is located on the first housing 20. The pole 34 is electrically insulated from the first housing 20.

More specifically, the pole 34 may be located on a side wall of the first housing 20. The first tab 12 is electrically connected to the pole 34. The second tab 13 is electrically connected to the first housing 20 or the second housing 30.

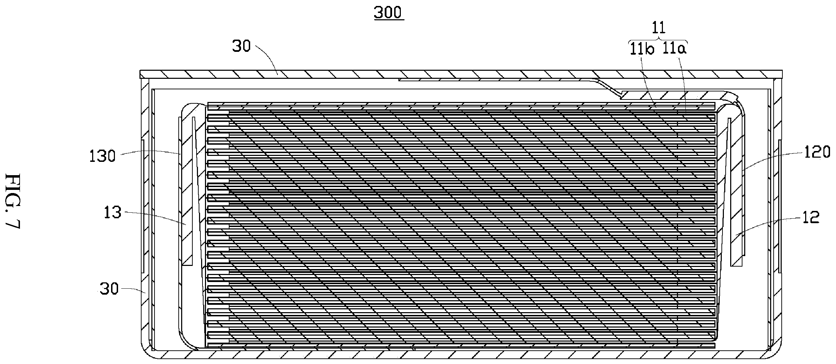

Referring to FIG. 7, another embodiment of this application further provides a battery 300. The difference from the battery 100 is that no pole is provided on the first housing 20 and the second housing 30. The first housing 20 and the second housing 30 are fastened by using a sealing ring (not shown in the figure), that is, the first housing 20 and the second housing 30 are electrically insulated by using the sealing ring. The first tab 12 is electrically connected to the second housing 30, and the second tab 13 is electrically connected to the first housing 20.

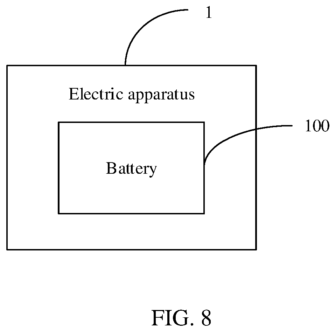

Referring to FIG. 8, this application further provides an electric apparatus 1, where the electric apparatus 1 includes the foregoing battery 100 (or the battery 200 or 300). The electric apparatus 1 may be a consumer electronic product (such as a mobile communications apparatus, a tablet computer, or a notebook computer), an electric tool, an unmanned aerial vehicle, an energy storage apparatus, a power apparatus, or the like. Referring to FIG. 8, in an embodiment, the electric apparatus 1 is an electric vehicle.

The foregoing descriptions are merely preferable embodiments of this application. The invention is defined by the appended claims.

## Claims

1. A battery (100,200,300), comprising a first housing (20), a laminated cell (10) accommodated in the first housing (20), and a second housing (30) mounted to the first housing (20); wherein the laminated cell (10) comprises an electrode assembly (11) and a first tab (12), wherein;
the electrode assembly (11) comprises a first side face (111), wherein the first tab (12) is connected to the first side face (111); and the first housing (20), the first tab (12), and the first side face (111) together define an injection space (101); and
the second housing (30) is provided with an injection opening (31), wherein a projection of the injection space (101) onto the second housing (30) covers at least a part of the injection opening (31),
the first tab (12) comprises a first face (121), a second face (122) and a second side face (123) connected between the first face (121) and the second face (122); the first face (121) is a face of the first tab (12) facing towards the laminated cell (10) and the second face (122) is a face of the tab (12) facing away from the laminated cell (10); and the first side face (111) comprises a flat region (1110) and a cambered region (1111) connected to the flat region (1110);
wherein the flat region (1110), the second side face (123), and the first housing (20) together define the injection space (101); a central axis (A) of the injection opening (31) is located inside the injection space (101),
a distance between the second side face (123) and a joint of the flat region (1110) and the cambered region (1111) is defined as L, and a distance between the central axis (A) of the injection opening (31) and the second side face (123) is less than or equal to 0.5L; and wherein the battery is a button cell.

2. The battery (100,200,300) according to claim 1, **characterized in that**, the distance between the central axis (A) of the injection opening (31) and the second side face (123) ranges from 0.4 mm to 1 mm.

3. The battery (100,200,300) according to claim 1, **characterized in that**, a sealing piece (32) is provided in the injection opening (31).

4. The battery (100,200,300) according to claim 3, **characterized in that**, the injection opening (31), the sealing piece (32) and the second housing (30) are all rounded; wherein a distance between a center of the injection opening (31) and a center of the second housing (30) is defined as M, a radius of the second housing (30) is defined as R1, a radius of the sealing piece (32) is defined as R2, and M=R1-R2-0.2 mm.

5. The battery (100) according to claim 1, **characterized in that**, the second housing (30) is further provided with a through hole (33), wherein a pole (34) electrically insulated from the second housing (30) is provided in the through hole (33).

6. The battery (100) according to claim 1, **characterized in that**, the electrode assembly (11) comprises a first electrode plate (11a), a second electrode plate (11b), and a separator located between the first electrode plate (11a) and the second electrode plate (11b); the first electrode plate (11a), the second electrode plate (11b) and the separator are stacked; wherein the first tab (12) is connected to the first electrode plate (11a), a second tab (13) is connected to the second electrode plate (11b), the first tab (12) is electrically connected to the pole (34), and the second tab (13) is electrically connected to the first housing (20) or the second housing (30).

7. The battery (300) according to claim 1, **characterized in that**, the first housing (20) and the second housing (30) are electrically insulated by using a sealing ring, the first tab (12) is electrically connected to the second housing (30), and the second tab (13) is electrically connected to the first housing (20).

8. The battery (300) according to any one of claims 1-7, **characterized in that**, the joint and the injection opening (31) are located on the same side of the second side face (123).

9. An electric apparatus (1), **characterized in that**, the electric apparatus (1) comprises the battery (100,200,300) according to any one of claims 1 to 8.

## Patentansprüche

1. Batterie (100, 200, 300), umfassend ein erstes Gehäuse (20), eine laminierte Zelle (10), die in dem ersten Gehäuse (20) untergebracht ist, und ein zweites Gehäuse (30), das an dem ersten Gehäuse (20) montiert ist; wobei die laminierte Zelle (10) eine Elektrodenbaugruppe (11) und eine erste Lasche (12) umfasst, wobei die Elektrodenbaugruppe (11) eine erste Seitenfläche (111) umfasst, wobei die erste Lasche (12) mit der ersten Seitenfläche (111) verbunden ist; und das erste Gehäuse (20), die erste Lasche (12) und die erste Seitenfläche (111) zusammen einen Einspritzraum (101) definieren; und
das zweite Gehäuse (30) mit einer Einspritzöffnung (31) versehen ist, wobei ein Vorsprung des Einspritzraums (101) auf das zweite Gehäuse (30) mindestens einen Teil der Einspritzöffnung (31) abdeckt,
die erste Lasche (12) eine erste Fläche (121), eine zweite Fläche (122) und eine zweite Seitenfläche (123) umfasst, die zwischen der ersten Fläche (121) und der zweiten Fläche (122) verbunden ist;
die erste Fläche (121) eine der beschichteten Zelle (10) zugewandte Fläche der ersten Lasche (12) ist und die zweite Fläche (122) eine von der beschichteten Zelle (10) weggewandte Fläche der Lasche (12) ist; und die erste Seitenfläche (111) einen flachen Bereich (1110) und einen mit dem flachen Bereich (1110) verbundenen gewölbten Bereich (1111) umfasst;
wobei der flache Bereich (1110), die zweite Seitenfläche (123) und das erste Gehäuse (20) zusammen den Einspritzraum (101) definieren; eine Mittelachse (A) der Einspritzöffnung (31) sich innerhalb des Einspritzraums (101) befindet,
ein Abstand zwischen der zweiten Seitenfläche (123) und einer Verbindung des flachen Bereichs (1110) und des gewölbten Bereichs (1111) als L definiert ist, und ein Abstand zwischen der Mittelachse (A) der Einspritzöffnung (31) und der zweiten Seitenfläche (123) kleiner oder gleich 0,5L ist; und wobei die Batterie eine Knopfzelle ist.

2. Batterie (100, 200, 300) nach Anspruch 1, **dadurch gekennzeichnet, dass** der Abstand zwischen der Mittelachse (A) der Einspritzöffnung (31) und der zweiten Seitenfläche (123) von 0,4 mm bis 1 mm beträgt.

3. Batterie (100, 200, 300) nach Anspruch 1, **dadurch gekennzeichnet, dass** in der Einspritzöffnung (31) ein Dichtungsstück (32) vorgesehen ist.

4. Batterie (100, 200, 300) nach Anspruch 3, **dadurch gekennzeichnet, dass** die Einspritzöffnung (31), das Dichtungsstück (32) und das zweite Gehäuse (30) alle abgerundet sind; wobei ein Abstand zwischen einer Mitte der Einspritzöffnung (31) und einer Mitte des zweiten Gehäuses (30) als M definiert ist, ein Radius des zweiten Gehäuses (30) als R1 definiert ist, ein Radius des Dichtungsstücks (32) als R2 definiert ist und M=R1-R2-0,2 mm.

5. Batterie (100) nach Anspruch 1, **dadurch gekennzeichnet, dass** das zweite Gehäuse (30) ferner mit einem Durchgangsloch (33) versehen ist, wobei in dem Durchgangsloch (33) ein von dem zweiten Gehäuse (30) elektrisch isolierter Pol (34) vorgesehen ist.

6. Batterie (100) nach Anspruch 1, **dadurch gekennzeichnet, dass** die Elektrodenbaugruppe (11) eine erste Elektrodenplatte (1la), eine zweite Elektrodenplatte (11b) und einen Trenner umfasst, der sich zwischen der ersten Elektrodenplatte (11a) und der zweiten Elektrodenplatte (11b) befindet; die erste Elektrodenplatte (1la), die zweite Elektrodenplatte (11b) und der Trenner gestapelt sind; wobei die erste Lasche (12) mit der ersten Elektrodenplatte (1la) verbunden ist, eine zweite Lasche (13) mit der zweiten Elektrodenplatte (11b) verbunden ist, die erste Lasche (12) elektrisch mit dem Pol (34) verbunden ist und die zweite Lasche (13) elektrisch mit dem ersten Gehäuse (20) oder dem zweiten Gehäuse (30) verbunden ist.

7. Batterie (300) nach Anspruch 1, **dadurch gekennzeichnet, dass** das erste Gehäuse (20) und das zweite Gehäuse (30) durch Verwendung eines Dichtrings elektrisch isoliert sind, die erste Lasche (12) elektrisch mit dem zweiten Gehäuse (30) verbunden ist und die zweite Lasche (13) elektrisch mit dem ersten Gehäuse (20) verbunden ist.

8. Batterie (300) nach einem der Ansprüche 1 bis 7, **dadurch gekennzeichnet, dass** sich die Verbindung und die Einspritzöffnung (31) auf derselben Seite der zweiten Seitenfläche (123) befinden.

9. Elektronische Vorrichtung (1), **dadurch gekennzeichnet, dass** die elektronische Vorrichtung (1) die Batterie (100, 200, 300) nach einem der Ansprüche 1 bis 8 umfasst.

## Revendications

1. Batterie (100, 200, 300), comprenant un premier boîtier (20), une cellule laminée (10) logée dans le premier boîtier (20), et un deuxième boîtier (30) monté sur le premier boîtier (20) ; dans laquelle la cellule laminée (10) comprend un ensemble d'électrodes (11) et une première languette (12), dans laquelle l'ensemble d'électrodes (11) comprend une première face latérale (111), la première languette (12) étant connectée à la première face latérale (111) ; et le premier boîtier (20), la première languette (12) et la première face latérale (111) définissent ensemble un espace d'injection (101) ;
et le deuxième boîtier (30) est pourvu d'une ouverture d'injection (31), dans laquelle une projection de l'ouverture d'injection (101) sur le deuxième boîtier (30) recouvre au moins une partie de l'ouverture d'injection (31),
la première languette (12) comprenant une première face (121), une deuxième face (122) et une deuxième face latérale (123) connectée entre la première face (121) et la deuxième face (122) ; la première face (121) étant une face de la première languette (12) orientée vers la cellule laminée (10) et la deuxième face (122) étant une face de la languette (12) orientée à l'écart de la cellule laminée (10) ; et la première face latérale (111) comprenant une région plate (1110) et une région bombée (1111) connectée à la région plate (1110), dans lequel la région plate (1110), la deuxième face latérale (123) et le premier boîtier (20) définissent ensemble l'espace d'injection (101) ; un axe central (A) de l'ouverture d'injection (31) étant situé à l'intérieur de l'ouverture d'injection (101), une distance entre la deuxième face latérale (123) et une jonction de la région plate (1110) et de la région bombée (1111) étant définie comme L, et une distance entre l'axe central (A) de l'ouverture d'injection (31) et la deuxième face latérale (123) étant inférieure ou égale à 0,5L, et la batterie étant une pile bouton.

2. La batterie (100,200,300) selon la revendication 1, **caractérisée en ce que** la distance entre l'axe central (A) de l'ouverture d'injection (31) et la deuxième face latérale (123) varie de 0,4 mm à 1 mm.

3. La batterie (100,200,300) selon la revendication 1, **caractérisée en ce qu'**une pièce d'étanchéité (32) est prévue dans l'ouverture d'injection (31).

4. La batterie (100,200,300) selon la revendication 3, **caractérisée en ce que** l'ouverture d'injection (31), la pièce d'étanchéité (32) et le deuxième boîtier (30) sont tous arrondis, dans lequel une distance entre un centre de l'ouverture d'injection (31) et un centre du deuxième boîtier (30) est définie comme M, un rayon du deuxième boîtier (30) est défini comme R1, un rayon de la pièce d'étanchéité (32) est défini comme R2, et M = R1 - R2 - 0,2 mm.

5. La batterie (100) selon la revendication 1, **caractérisée en ce que** le deuxième boîtier (30) est pourvu en outre d'un trou traversant (33), dans lequel un pôle (34) électriquement isolé du deuxième boîtier (30) est prévu dans le trou traversant (33).

6. La batterie (100) selon la revendication 1, **caractérisée en ce que** l'ensemble d'électrodes (11) comprend une première plaque d'électrode (11a), une deuxième plaque d'électrode (11b), et un séparateur situé entre la première plaque d'électrode (11a) et la deuxième plaque d'électrode (11b) ; la première plaque d'électrode (11a), la deuxième plaque d'électrode (11b) et le séparateur étant empilés ; dans lequel la première languette (12) est connectée à la première plaque d'électrode (11a), une deuxième languette (13) est connectée à la deuxième plaque d'électrode (11b), la première languette (12) est connectée électriquement au pôle (34), et la deuxième languette (13) est connectée électriquement au premier boîtier (20) ou au deuxième boîtier (30).

7. La batterie (300) selon la revendication 1, **caractérisée en ce que** le premier boîtier (20) et le deuxième boîtier (30) sont isolés électriquement en utilisant une bague d'étanchéité, la première languette (12) étant connectée électriquement au deuxième boîtier (30), et la deuxième languette (13) étant connectée électriquement au premier boîtier (20).

8. La batterie (300) selon l'une quelconque des revendications 1 à 7, **caractérisée en ce que** la jonction et l'ouverture d'injection (31) sont situées sur le même côté de la deuxième face latérale (123).

9. Un appareil électrique (1), **caractérisé en ce que** l'appareil électrique (1) comprend la batterie (100,200,300) selon l'une quelconque des revendications 1 à 8.
